# EUROPEAN PATENT SPECIFICATION

(11) **EP 4 646 453 B1**
(45) Date of publication and mention of the grant of the patent: **01.04.2026**
(21) Application number: 25712159.0
(22) Date of filing: 13.03.2025
(51) Int. Cl.: C08G 65/40, C08G 75/23, C08J 5/18, C08K 3/34, C08L 71/00, C08L 81/06, C09D 181/06, C09J 181/06, H01B 3/30

(54) **BLEND COMPRISING A POLYARYLENE ETHER SULFONE POLYMER HAVING LESS THAN 0.05 WT% OH-END GROUPS AND TALC HAVING A VOLUMETRIC AVERAGE PARTICLE SIZE OF LESS THAN 10 MICROMETER**
MISCHUNG ENTHALTEND EIN POLYARYLENETHERSULFONPOLYMER MIT WENIGER ALS 0.05 GEW.-% OH-ENDGRUPPEN UND TALK MIT EINER VOLUMENMÄSSIGEN MITTLEREN PARTIKELGRÖSSE KLEINER ALS 10 MIKRON
MÉLANGE COMPRENANT UN POLYMÈRE DE POLYARYLÈNE ÉTHER SULFONE AYANT MOINS DE 0,5 % EN POIDS DE GROUPES OH ET TALC AYANT UNE TAILLE DE PARTICULE MOYENNE VOLUMÉTRIQUE INFÉRIEURE À 10 MICRONS

(30) Priority: 20.03.2024 EP 24164801
(43) Date of publication of application: 12.11.2025
(73) Proprietor: BASF SE, 67056 Ludwigshafen am Rhein (DE)
(72) Inventor: WEBER, Martin, 67487 Maikammer (DE); JUNGHANS, Carsten, 67056 Ludwigshafen am Rhein (DE); HENNENBERGER, Florian, 67056 Ludwigshafen am Rhein (DE)
(74) Representative: BASF IP Association
(86) International application number: PCT/EP2025/056880
(87) International publication number: WO 2025/195890

(56) References cited:
- WO-A1-2023/094231
- WO-A1-2023/285137

## Description

The present invention relates to a blend comprising as components 50 to 85 wt.% of at least one polyarylene ether sulfone polymer having less than 0.05 wt.% OH-endgroups (P1), and 15 to 50 wt.% of talc having a volumetric average particle size (D_{[4,3]}) of less than 10 µm (P2). Another aspect of the present invention is a film made from the blend, and the use of the blend or the film in applications of electrical insulation. Yet another aspect of the present invention is an electronic device comprising a metal conductor, and the blend or the film, wherein the blend or the film at least partially electrical isolates the metal conductor.

Polyarylene ether sulfone polymers belong to the group of high temperature resistant polymers showing high heat resistance, excellent mechanical performance, and inherent flame retardancy (E.M. Koch, H.-M. Walter, Kunststoffe 80 (1990) 1146; E. Döring, Kunststoffe 80, (1990) 1149, N. Inchaurondo-Nehm, Kunststoffe 2008 190). For challenging applications polyarylene ether sulfone polymers are reinforced with fibers or fillers, particularly glass fibers. This usually leads to a significant increase in stiffness and strength, but the flow of the products is reduced, and the melt stability of the compounds is poor compared to the non-reinforced matrix material.

For applications in the E&E-segment, polyarylene ether sulfone polymer compounds with high continuous use temperature, good processing behavior and improved comparative tracking index (CTI) are interesting.

In EP 2 594 610 A1 blends based on polyarylene ether sulfone polymers and semi-aromatic polyamides having improved CTI are described. Unfortunately, such compounds have poor flame retardancy and do sometimes not reach V-0 in the UL-94 test.

WO2023/094231 discloses blends based on a polyarylene ether sulfone having low OH-endgroups content and semi-aromatic polyamides having improved CTI and good flame retardancy.

In EP 2 256 167 B1 flame retardant compounds having phosphonates as flame retardants are described. These compounds have low processing stability at elevated temperature.

DE 10 2019 214 712 deals with flame retardant compounds having improved CTI.

Since these compounds contain significant quantities of polyamide, they suffer from a high moisture uptake.

Therefore, there is a need for the provision of new blends based on polyarylene ether sulfone polymers having an improved mechanical performance, excellent processability and good flame retardancy properties.

**This object** is achieved by a blend comprising as components
(P1) at least one polyarylene ether sulfone polymer having less than 0.05 wt.% OH-endgroups, and
(P2) talc having a volumetric average particle size (D_{[4,3]}) of less than 10 µm,
wherein the blend comprises component (P1) in an amount in the range of 50 to 85 wt.% and component (P2) in an amount in the range of 15 to 50 wt.%, wherein the wt.% values are in each case based on the total weight of the blend.

Surprisingly, it was found that the blend according to the invention has improved mechanical performance, excellent processability, good CTI-values, and good flame retardancy properties. The blend can be used to make films. The blend and the films made thereof are suitable for the use in applications of electrical insulation, for example the blend or film can be used for electrical insulation of a metal conductor. The blend or the film can be used for the production of electronic devices comprising a metal conductor wherein the blend or the film at least partially electrical isolates the metal conductor. Moreover, the film or the blend can be used as a slot liner for wrapping a metal coil, preferably a copper coil.

The invention is described in more detail hereinafter.

### Component (P1)

The blend comprises as component (P1) at least one polyarylene ether sulfone polymer having less than 0.05 wt.% OH-endgroups. The terms "component (P1)" and "at least one polyarylene ether sulfone polymer having less than 0.05 wt.% OH-endgroups" herein are used synonymously, and therefore, preferably have the same meaning.

What is meant herein by "at least one polyarylene ether sulfone polymer having less than 0.05 wt.% OH-endgroups" is precisely one polyarylene ether sulfone polymer having less than 0.05 wt.% OH-endgroups and also mixtures of two or more different polyarylene ether sulfone polymers having less than 0.05 wt.% OH-endgroups.

Polyarylene ether sulfone polymers can be formed *inter alia* either via the hydroxide method, wherein a salt is first formed from the dihydroxy component and the hydroxide, or via the carbonate method.

General information regarding the formation of polyarylene ether sulfone polymers by the hydroxide method is found *inter alia* in R.N. Johnson et.al., J.Polym. Sci. A-1 5 (1967) 2375, while the carbonate method is described in J.E. McGrath et.al., Polymer 25 (1984) 1827.

Methods of forming polyarylene ether sulfone polymers from aromatic bishalogen compounds and aromatic bisphenols or salts thereof in an aprotic solvent in the presence of one or more alkali metal or ammonium carbonates or bicarbonates are known to a person skilled in the art and are described in EP A 297 363 and EP-A 135 130 for example.

High-performance thermoplastics such as polyarylene ether sulfone polymers are generally formed by polycondensation reactions which are typically carried out at a high reaction temperature in dipolar aprotic solvents, for example DMF, DMAc, sulfolane, DMSO and NMP.

EP 0 412 499 describes a method of forming polyarylene ether sulfone polymers. The dihalogen component used in the method of EP 0 412 499 is, for example, 4,4'-dichlorodiphenyl sulfone or 4,4'-difluorodiphenyl sulfone. The dihydroxy components described in EP 0 412 499 include bisphenol A, 4,4'-dihydroxydiphenyl sulfone and 4,4'-dihydroxybenzophenone. The polycondensation described in EP 0 412 499 is carried out in the presence of sodium carbonate or sodium bicarbonate.

Preferred embodiments for the preparation of suitable polyarylene sulfone polymers, that can be used as component (P1) are described below.

In a preferred embodiment component (P1) is obtained by converting a reaction mixture (R_{G}) comprising as components:
(A1) a dihalogen component comprising not less than 80 wt% of at least one dihalogen compound selected from the group consisting of 4,4'-dichlorodiphenyl sulfone and 4,4'-difluorodiphenyl sulfone, based on the overall weight of component (A1) in reaction mixture (R_{G}),
(B1) a dihydroxy component comprising not less than 80 wt% of at least one dihydroxy compound selected from the group consisting of 4,4'-dihydroxydiphenyl sulfone, bisphenol A, 4,4'-dihydroxybiphenyl and hydroquinone, based on the overall weight of component (B1) in reaction mixture (R_{G}).

Another object of the present invention, therefore, is a blend, wherein (component (P1)) comprised in the blend is obtained by converting a reaction mixture (R_{G}) comprising as components:
(A1) a dihalogen component comprising not less than 80 wt% of at least one dihalogen compound selected from the group consisting of 4,4'-dichlorodiphenyl sulfone and 4,4'-difluorodiphenyl sulfone, based on the overall weight of component (A1) in reaction mixture (R_{G}),
(B1) a dihydroxy component comprising not less than 80 wt% of at least one dihydroxy compound selected from the group consisting of 4,4'-dihydroxydiphenyl sulfone, bisphenol A, 4,4'-dihydroxybiphenyl and hydroquinone, based on the overall weight of component (B1) in reaction mixture (R_{G}).

Component (P1) is preferably formed by converting a reaction mixture (R_{G}) comprising the above-described components (A1), (B1), and additionally components (C), and (D). Components (A1) and (B1) end up reacting with each other in a polycondensation reaction. Component (D) serves as solvent. Component (C) serves as base to deprotonate component (B1) during the condensation reaction.

The reaction mixture (R_{G}) is the mixture which is preferably used for forming component (P1). All particulars herein in relation to reaction mixture (R_{G}) thus relate to the mixture which is present before the polycondensation. It is during the method of the present invention that the polycondensation takes place to convert reaction mixture (R_{G}) into the target product, component (P1), by polycondensation of components (A1) and (B1). The mixture which is obtained after the polycondensation and comprises the target product, component (P1), is also referred to as product mixture (P_{G}).

In general, the components of reaction mixture (R_{G}) are reacted conjointly. The individual components may be mixed in a preceding step and then reacted. It is also possible to feed the individual components into a reactor, where they are mixed and subsequently reacted.

In the method of the present invention, the individual components of reaction mixture (R_{G}) are generally converted conjointly. This conversion preferably takes place in a single stage. That is, the deprotonation of component (B1) and the condensation reaction between components (A1) and (B1) take place in a single reaction stage without isolation of intermediates, for example the deprotonated species of component (B1).

### Component (A1)

Component (A1), which is also referred to as the dihalogen component, is present in reaction mixture (R_{G}) in the form of at least one dihalogen compound. What is meant herein by "at least one dihalogen compound" is precisely one dihalogen compound and also mixtures of two or more dihalogen compounds.

So, component (A1) may comprise not only a single dihalogen compound but also a mixture of two or more different dihalogen compounds.

Preferably component (A1) comprises not less than 50 wt% of at least one dihalogen compound selected from the group consisting of 4,4'-dichlorodiphenyl sulfone and 4,4'-difluorodiphenyl sulfone, based on the overall weight of component (A1) in reaction mixture (R_{G}). The weight percentages here in relation to component (A1) further relate to the sum total of the 4,4'-dichlorodiphenyl sulfone used and of the 4,4'-difluorodiphenyl sulfone used. 4,4'-Dichlorodiphenyl sulfone is preferable to 4,4'-difluorodiphenyl sulfone. 4,4'-dichlorodiphenyl sulfone is especially preferred.

In one embodiment, component (A1) comprises not less than 80 wt%, preferably not less than 90 wt%, and more preferably not less than 95 wt% of at least one dihalogen compound selected from the group consisting of 4,4'-dichlorodiphenyl sulfone and 4,4'-difluorodiphenyl sulfone, based on the overall weight of component (A1) in reaction mixture (R_{G}). The weight percentages here in relation to component (A1) further relate to the sum total of the 4,4'-dichlorodiphenyl sulfone used and of the 4,4'-difluorodiphenyl sulfone used.

In one particularly preferred embodiment, component (A1) comprises not less than 50 wt%, preferably not less than 80 wt%, more preferably not less than 90 wt% and especially not less than 95 wt% of 4,4'-dichlorodiphenyl sulfone.

It is further particularly preferable for reaction mixture (R_{G}) not to contain any further dihalogen compounds in addition to the dihalogen compounds of component (A1).

In a further particularly preferred embodiment, component (A1) consists of 4,4'-dichlorodiphenyl sulfone.

### Component (B1)

Component (B1), which is also referred to as the dihydroxy component, is present in reaction mixture (R_{G}) in the form of at least one dihydroxy compound. What is meant herein by "at least one dihydroxy compound" is precisely one dihydroxy compound and also mixtures of two or more dihydroxy compounds.

So, component (B1) may comprise not only a single dihydroxy compound but also mixtures of two or more different dihydroxy compounds.

In one embodiment component (B1) comprise not less than 50 wt% of at least one dihydroxy compound selected from the group consisting of 4,4'-dihydroxydiphenyl sulfone, bisphenol A (2,2-bis(4-hydroxyphenyl)propane), 4,4'-dihydroxybiphenyl and hydroquinone, based on the overall weight of component (B1) in reaction mixture (R_{G}). The weight percentages here in relation to component (B1) further relate to the total sum of the 4,4'-dihydroxydiphenyl sulfone, bisphenol A (2,2-bis-(4-hydroxyphenyl)propane), 4,4'-dihydroxybenzophenone and hydroquinone used. Of the aforementioned dihydroxy compounds 4,4'-dihydroxydiphenyl sulfone, bisphenol A, and 4,4'-dihydroxybiphenyl are preferable, while 4,4'-dihydroxydiphenyl sulfone is particularly preferable.

In one embodiment, component (B1) comprises not less than 80 wt%, preferably not less than 90 wt% and more preferably not less than 95 wt% of at least one dihydroxy compound selected from the group consisting of 4,4'-dihydroxydiphenyl sulfone, bisphenol A (2,2-bis(4-hydroxyphenyl)propane), 4,4'-dihydroxybiphenyl and hydroquinone, based on the overall weight of component (B1) in reaction mixture (R_{G}). The weight percentages here in relation to component (B1) further relate to the total sum of the 4,4'-dihydroxydiphenyl sulfone, bisphenol A (2,2-bis-(4-hydroxyphenyl)-propane), 4,4'-dihydroxybiphenyl and hydroquinone used.

In one particularly preferred embodiment, component (B1) comprises not less than 50 wt%, preferably not less than 80 wt%, more preferably not less than 90 wt% and especially not less than 95 wt% of bisphenol A.

In one particularly preferred embodiment, component (B1) comprises not less than 50 wt%, preferably not less than 80 wt%, more preferably not less than 90 wt% and especially not less than 95 wt% of 4,4'-dihydroxydiphenyl sulfone.

In one particularly preferred embodiment, component (B1) comprises not less than 50 wt%, preferably not less than 80 wt%, more preferably not less than 90 wt% and especially not less than 95 wt% of 4,4'-dihydroxybiphenyl.

It is further particularly preferable that the reaction mixture (R_{G}) does not contain any further dihydroxy compounds in addition to the dihydroxy compound(s) of component (B1).

In a further particularly preferred embodiment, component (B1) consists of 4,4'-dihydroxydiphenyl sulfone.

Since reaction mixture (R_{G}) comprises potassium carbonate as component (C), the hydroxyl groups of the dihydroxy compounds used as component (B1) may partly be present in reaction mixture (R_{G}) in deprotonated form.

### Component (C)

Reaction mixture (R_{G}) comprises potassium carbonate as component (C), which is also known as the carbonate component. The used potassium carbonate is preferably anhydrous.

In a preferred embodiment component (C) comprise not less than 90 wt% of potassium carbonate, based on the overall weight of component (C) in reaction mixture (R_{G}).

In one embodiment, component (C) comprises not less than 80 wt%, preferably not less than 90 wt% and more preferably not less than 98 wt% of potassium carbonate having a volume-averaged particle size of < 50 µm, based on the overall weight of component (B1) in reaction mixture (R_{G}).

The molar ratio of component (C) to component (B) is generally in the range of 1.03 to 2.0, preferably in the range of 1.05 to 1.5.

In one particularly preferred embodiment, component (C) consists of potassium carbonate.

### Component (D)

Reaction mixture (R_{G}) preferably comprises at least one aprotic polar solvent as component (D). What is meant by "at least one aprotic polar solvent" in the present invention is exactly one aprotic polar solvent and mixtures of two or more aprotic polar solvents.

Useful aprotic polar solvents include for example, anisole, dimethylformamide, dimethyl sulfoxide, sulfolane, N-methyl-2-pyrrolidone, N-ethyl-2-pyrrolidone and also mixtures thereof.

N-methyl-2-pyrrolidone, N-ethyl-2-pyrrolidone and also mixtures thereof are preferable for use as aprotic polar solvent. N-methyl-2-pyrrolidone is particularly preferable for use as aprotic polar solvent.

In one preferred embodiment, component (D) comprises not less than 90 wt% of at least one solvent selected from the group consisting of N-methyl-2-pyrrolidone and N-ethyl-2-pyrrolidone, based on the overall weight of component (D) in reaction mixture (R_{G}). N-methyl-2-pyrrolidone is particularly preferable for use as component (D).

In one preferred embodiment, component (D) consists of N-methyl-2-pyrrolidone. N-methyl-2-pyrrolidone is also known as NMP or N-methylpyrrolidone.

In a further preferred embodiment, the reaction mixture does not contain any further aprotic polar solvents in addition to the aprotic polar solvents of component (D).

To form the polyarylene ether sulfone polymer the reaction mixture (R_{G}) is preferably reacted under conditions of the carbonate method. The reaction involved is a polycondensation reaction and is generally carried out at temperatures in the range from 80 to 250°C and preferably at temperatures in the range from 100 to 220°C, the upper limit of the temperature being determined by the boiling point of the aprotic polar solvent (component D) at atmospheric pressure (1013.25 mbar). The reaction is preferably carried out at atmospheric pressure. The time interval for the reaction is preferably in the range from 0.5 to 12 hours, especially in the range from 2 to 10 hours.

The at least one polyarylene ether sulfone polymer (component (P1)) has less than 0.05 wt.% OH-endgroups, preferably less than 0.04 wt.% OH-endgroups, more preferred less than 0.03 wt.% OH-endgroups, and especially preferred less than 0.02 wt.% OH-endgroups. The amount of OH-endgroups is determined by potentiometric titration of the respective component (P1) in Dimethylformamide as solvent.

The amount of OH-endgroups in component (P1) can be controlled by two factors, namely, the molar ratio of component (B1) to component (A1) in the reaction mixture (R_{G}) and the degree of etherification of the polyarylene ether sulfone polymer obtained after the polycondensation.

The molar ratio of component (B1) to component (A1) in the reaction mixture (R_{G}) is preferably in the range of 0.97 to 1.03, more preferred in the range of 0.98 to 1.02 and especially preferred in the range of 0.985 to 1.015.

In case the polyarylene ether sulfone polymer obtained after the polycondensation comprises an amount of OH-endgroups which is too high, to be suitable as component (P1) the amount of OH-endgroups can be reduced by etherification to RO-endgroups, preferably to CH₃O-endgroups.

The terminal groups of the polyarylene ether sulfone polymers, as described above, depend on the reaction conditions and the molar ratios of components (A1) and (B1) and are generally either halogen groups, in particular chlorine groups, OH-groups, or etherified groups, in particular alkyl ether groups. Etherified end groups are obtainable by reacting the terminal OH/phenoxide groups (OH-endgroups) with suitable etherifying agents.

The amount of chlorine endgroups can be determined by elemental analysis. The amount of CH₃O-endgroups can be determined by ¹H-NMR.

Examples of suitable etherifying agents are monofunctional alkyl or aryl halides, for example C₁-C₆ alkyl chlorides, bromides or iodides, preferably methyl chloride, or benzyl chloride, bromide or iodide, or mixtures thereof. The terminal groups of the polyarylene ether sulfone polymer according to the present invention are preferably halogen groups, in particular chlorine, and also alkoxy groups, in particular methoxy, aryloxy groups, in particular phenoxy, or benzyloxy.

The polyarylene ether sulfone polymer obtained according to the present invention may be isolated by precipitating the polymer solution in water or mixtures of water with further solvents, for example alcohols. The precipitated polyarylene ether sulfone polymer may subsequently be extracted with water and thereafter dried. In one embodiment of the invention, the precipitation may also take place in an acidic medium. Suitable acids include, for example, organic or inorganic acids, for example carboxylic acids such as acetic acid, propionic acid, succinic acid or citric acid, and also mineral acids such as, for example, hydrochloric acid, sulfuric acid or phosphoric acid.

Suitable methods of forming the aforementioned polyarylene ether sulfone polymers are known per se to a person skilled in the art and are described, for example, in Herman F. Mark, "Encyclopedia of Polymer Science and Technology", third edition, Volume 4, 2003, chapter "Polysulfones" on pages 2 to 8 and also in Hans R. Kricheldorf, "Aromatic Polyethers" in: Handbook of Polymer Synthesis, second edition, 2005 on pages 427 to 443.

Preferred polyarylene ether sulfone polymers usable as component (P1) comprise at least one of the following building blocks la to Ic as structural repeat units:

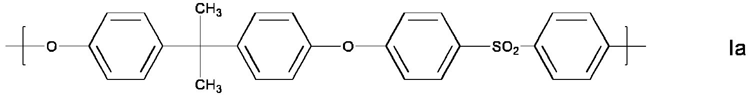

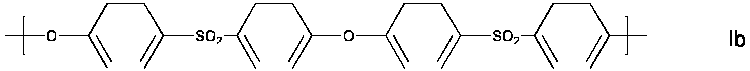

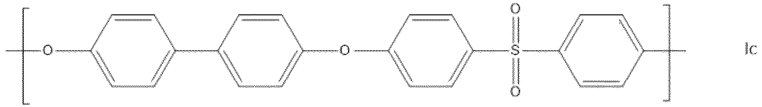

It is also particularly preferable for the polyarylene ether sulfone polymer usable as component (P1) to be composed essentially of at least one variety of building blocks selected from the group consisting of la, Ib and Ic.

Particular preference is further given to polyarylene ether sulfone polymers usable as component (P1) composed of repeat units of formula Ib. Polyether sulfone (PESU) is another appellation for these polyarylene ether sulfone polymers.

Abbreviations such as PESU and PSU herein are conform to DIN EN ISO 1043-1 (Plastics - Symbols and abbreviated terms - Part 1: Basic polymers and their special characteristics (ISO 1043-1:2001); German version of EN ISO 1043-1:2002).

Particular preference is further given to block or other copolymers constructed of repeat units of formulae la, Ib and Ic.

The weight average molecular weight (M_{W}) of the polyarylene ether sulfone polymer (usable as component (P1)) obtainable by the above described method is generally in the range from 10 000 to 150 000 g/mol, preferably in the range from 15 000 to 120 000 g/mol and more preferably in the range from 18 000 to 100 000 g/mol. The weight average molecular weights (M_{W}) are measured using gel permeation chromatography (GPC). This measurement is carried out using gel permeation chromatography (GPC). Dimethylacetamide (DMAc) was used as solvent and narrowly distributed polymethyl methacrylate was used as standard in the measurement.

Preferred are polyarylene ether sulfone polymers (component (P1)) with a Viscosity number (V.N.) between 40 and 120 ml/g measured according to ISO 1628, preferably in N-methyl-2-pyrrolidone (NMP) at 25 °C.

In a preferred embodiment, the blend comprises as component (P1) at least one polyarylene ether sulfone polymer selected from the group consisting of polysulfone (PSU), polyether sulfone (PESU) and polybiphenyl sulfone (PPSU).

In an especially preferred embodiment, the polyarylene ether sulfone polymer (component (P1)) comprised in the blend is polyether sulfone (PESU).

### Component (P2)

The blend according to the invention comprises as component (P2) talc having a volumetric average particle size (D_{[4,3]}) of less than 10 µm. The terms "component (P2)" and "talc having a volumetric average particle size (D_{[4,3]}) of less than 10 µm" herein are used synonymously, and therefore, preferably have the same meaning.

Talc, also denominated as talcum, is a clay mineral composed of hydrated magnesium silicate, preferably with the chemical formula Mg₃Si₄O₁₀(OH)₂.

The talc used as component (P2) has a volumetric average particle size (D_{[4,3]}) of less than 10 µm, preferably of less than 9 µm, more preferably of less than 8 µm and most preferred of less than 7 µm. The volumetric average particle size (D_{[4,3]}) is determined by laser diffraction as described in "A basic guide to particle characterization", Malvern Instruments Ltd., 2015. By laser diffraction particle sizes in the range of 10 nm to 10 mm can be measured.

### Component (P3)

In one embodiment the blend comprises as component (P3) at least one polyarylene ether sulfone polymer having more than 0.1 wt.% OH-endgroups. The terms "component (P3)" and "at least one polyarylene ether sulfone polymer having more than 0.1 wt.% OH-endgroups" herein are used synonymously, and therefore, preferably have the same meaning.

What is meant herein by "at least one polyarylene ether sulfone polymer having more than 0.1 wt.% OH-endgroups" is precisely one polyarylene ether sulfone polymer having more than 0.1 wt.% OH-endgroups and also mixtures of two or more different polyarylene ether sulfone polymers having more than 0.1 wt.% OH-endgroups.

For component (P3) the explanations and preferences given above in view of component (P1) hold true accordingly with the exception that the amount on OH-endgroups is different.

In a preferred embodiment component (P3) is obtained by converting a reaction mixture (R_{G}) as described above in view of component (P1).

The at least one polyarylene ether sulfone polymer (component (P3)) has more than 0.1 wt.% OH-endgroups, preferably more than 0.11 wt.% OH-endgroups, more preferred more than 0.12 wt.% OH-endgroups, and especially preferred more than 0.14 wt.% OH-endgroups. The amount of OH-endgroups is determined by potentiometric titration as described above.

The molar ratio of component (B1) to component (A1) in the reaction mixture (R_{G}) is preferably in the range of 1.01 to 1.03, more preferred in the range of 1.012 to 1.026 and especially preferred in the range of 1.015 to 1.025.

### Component (P4)

In one embodiment the blend comprises as component (P4) at least one fatty acid having 10 to 34 carbon atoms. The terms "component (P4)" and "at least one fatty acid having 10 to 34 carbon atoms" herein are used synonymously, and therefore, preferably have the same meaning.

What is meant herein by " at least one fatty acid having 10 to 34 carbon atoms" is precisely one fatty acid having 10 to 34 carbon atoms and also mixtures of two or more different at least one fatty acid having 10 to 34 carbon atoms.

The fatty acid can be unbranched, branched, saturated or unsaturated. As component (P4) unbranched fatty acids are preferred. Most preferred as component (P4) are unbranched saturated fatty acids having 10 to 34 carbon atoms, more preferred having 12 to 26 carbon atoms, even more preferred 14 to 20 carbon atoms, and most preferred 16 to 20 carbon atoms. Especially preferred component (P4) is stearic acid. Stearic acid is commercially available, for example from KLK Oleo. In particular, stearic acid with a purity of > 98% and a softening regime from 55 to 65°C is used.

### Blend

The blend according to the invention contains components (P1) and (P2) and optionally component (P3) and/or component (P4).

In a preferred embodiment, the blend according to the invention comprises 60 to 82 wt.-%, more preferred 60 to 81.9 wt.-%, particularly preferred 60 to 81.5 wt.-%, and most preferred 60 to 81.4 wt.-%of component (P1), based on the total weight of the blend.

In preferred embodiment, the blend according to the invention comprises 18 to 40 wt.-%, more preferred 18 to 39.9 wt.-%, particularly preferred 18 to 39.5 wt.-%, and most preferred 18 to 39.4 wt.-%of component (P2), based on the total weight of the blend.

In preferred embodiment, the blend according to the invention comprises 0.5 to 15 wt.-%, and more preferred 0.5 to 7.5 wt.-% of component (P3), based on the total weight of the blend.

In another preferred embodiment, the blend according to the invention comprises 0.1 to 2 wt.-%, and more preferred 0.1 to 1.5 wt.-% of component (P4), based on the total weight of the blend.

In a preferred embodiment the blend comprises,
60 to 82 wt.% of component (P1),
18 to 40 wt.% of component (P2),
wherein the wt.% values are in each case based on the total weight of the blend.

More preferred the blend comprises,
60 to 81.9 wt.% of component (P1),
18 to 39.9 wt.% of component (P2),
0.1 to 2 wt.% of component (P4),
wherein the wt.% values are in each case based on the total weight of the blend.

More preferred the blend comprises,
60 to 81.5 wt.% of component (P1),
18 to 39.5 wt.% of component (P2),
0.5 to 15 wt.% of component (P3),
wherein the wt.% values are in each case based on the total weight of the blend.

Particularly preferred the blend comprises
60 to 81.4 wt.% of component (P1),
18 to 39.4 wt.% of component (P2),
0.5 to 15 wt.% of component (P3),
0.1 to 2 wt.% of component (P4),
wherein the wt.% values are in each case based on the total weight of the blend.

Most preferred the blend comprises
60 to 81.4 wt.% of component (P1),
18 to 39.4 wt.% of component (P2),
0.5 to 7.5 wt.% of component (P3),
0.1 to 1.5 wt.% of component (P4),
wherein the wt.% values are in each case based on the total weight of the blend.

The blend according to the invention can be produced by methods known to the person skilled in the art, for example by compounding components (P1) and (P2), as well as optionally component (P3) and/or optionally component (P4) in a single or twin-screw extruder (ZSK18), a brabender mixer, a banburry mixer of a kneader.

Molded parts, prepared from the blend according to the invention show good mechanical properties, namely good E-modulus, strength, tensile elongation, impact strength and notched impact strength.

Molded parts, prepared from the blend according to the invention, moreover, show a good comparative tracking index (CTI) and a good flame retardancy performance. The blend according to the invention, moreover, shows good processing stability (melt stability).

Tensile testing is generally done according to ISO 527 (E-modulus, strength, tensile elongation). The impact strength is generally tested according to ISO 179 1eU. Notched impact is generally tested according to ISO 179 1eA.

The CTI is generally measured according to IEC 60112 on samples having a thickness of 4 mm. The flame retardancy performance is generally tested according to UL-94 with samples of 1.6 mm thickness.

The processing stability (melt stability) of the blend is measured in the melted form at 400°C and at a shear rate of 1150 s⁻¹. The viscosity is measured after five minutes and after 30 minutes. The processing stability is the ratio of the viscosity after 30 minutes to the viscosity after 5 minutes.

The solution viscosity of the polyarylene ether sulfone polymers is preferably determined using a solution of 0,01g/ml in N-Methylpyrrolidon at 25°C.

Another object of the present invention is a film made from the blend according to the invention as described above.

The film made from the blend has preferably a thickness in the range of 10 to 500 µm, more preferred in the range of 12.5 to 400 µm and particularly preferred int the range of 15 to 350 µm.

The preparation of the film is known to the person skilled in the art. The film can, for example, be prepared by film extrusion as described above. Details about film extrusion are known in the art, e.g. from Chris Rauwendaal, "Polymer extrusion", Hansa, 5. Edition 2014.

In view of the excellent mechanical stability, the good flame retardancy properties in combination with excellent CTI values, the blend and films made thereof can be advantageously used in applications of electrical insulation.

Therefore, another object of the present invention is the use of the blend according to the invention or of a film made of this blend in applications of electrical insulation. In a preferred embodiment the blend or the film made of the blend is used for electrical insulating a metal conductor.

In a preferred embodiment, the blend or the film made of the blend at least partially electrical insulates the surface of the metal conductor.

Another object of the present invention are electronic devices comprising a metal conductor and a blend or a film made of the blend, wherein the blend or the film made of the blend at least partially electrical insulates the metal conductor.

Examples for electronic devices are cables comprising at least one metal wire which is covered by the blend, or a film made of the blend to electrical insulate the metal wire.

In a preferred embodiment, the electronic device comprises a metal coil, preferably a copper coil, wrapped in a slot liner made from the blend according to the invention. In this embodiment, the individual wires contained in the metal coil are not wrapped with the blend or the film made of the blend, but the outer surface of the metal coil is wrapped with a blend according to the invention or a film made thereof. This outer wrapping is also called "slot liner".

The present invention is more particularly elucidated by the examples which follow, without being restricted to it.

### Components used:

### Component (P1)

| | |
|---|---|
| PESU 1: | Polyethersulfone having with a viscosity number (V.N.) of 49 ml/g (ISO 1628, NMP, 25°C), 0.19 wt.% of Cl-endgroups (determined by elemental analysis), 0.23 wt.% of CH₃O-endgroups (determined by ¹H-NMR), and OH-endgroups (determined by potentiometric titration) below 0.02 wt.%. |

### Component (P2)

| | |
|---|---|
| Talc 1: | Talc having an average volumetric particle size (D[4,3]) of 5.7 µm |
| Talc 2: | Talc having an average volumetric particle size (D[4,3]) of 12.5 µm. |

### Component (P3)

| | |
|---|---|
| PESU 2: | Polyethersulfone having with a viscosity number (V.N.) of 48.3 ml/g (ISO 1628, NMP, 25°C), 0.22 wt.% OH-endgroups (determined by potentiometric titration) |

### Component (P4)

| | |
|---|---|
| FA 1: | Stearic acid (softening regime from 55 to 60°C) |

### Component (P2C)

| | |
|---|---|
| BV1: | Glass fibres chopped strands (average length 4,5 mm, average diameter 10µm, and a polyurethane sizing) |

### Production and testing of the blends

Compounding was done using a twin screw extruder (ZSK 18), the barrel temperatures were set to keep the melt temperature below 380°C. Moulding of the test samples was done at a melt temperature of 360°C and a mold temperature of 140°C.

Tensile testing was done according to ISO 527 (E-Modulus, strength, tensile elongation).

Impact strength was tested according to ISO 179 1eU, while notched impact was tested according to ISO 179 1eA.

The CTI was measured according to IEC 60112 on samples having a thickness of 4 mm. The FR-performance was tested according to UL-94 with samples of 1.6 mm thickness.

To assess the processing stability (melt stability) of the blends the viscosity of the melt at 400°C was measured for 30 minutes at a shear rate of 1150 s⁻¹. In table 1 the ratio of the values measured at 5 minutes and after 30 minutes are shown.

The solution viscosity of the polyarylethers was determined using a solution of 0,01g/ml in N-Methylpyrrolidon at 25°C. The content of OH-endgroups was measured by potentiometric titration in DMF.

**Table 1**

| Blend | C1 | 2 | 3 | 4 | C5 | 6 | 7 | 8 | 9 | C10 |
|---|---|---|---|---|---|---|---|---|---|---|
| PESU 1 [wt.%] | 88 | 85 | 80 | 75 | 80 | 77.5 | 75 | 79 | 76.5 | 80 |
| Talc 1 [wt.%] | 12 | 15 | 20 | 25 | - | 20 | 20 | 20 | 20 | - |
| BV1 [wt.%] | - | - | - | - | 20 | - | - | - | - | - |
| Talc 2 [wt.%] | - | - | - | - | - | - | - | - | - | 20 |
| PESU2 [wt.%] | - | - | - | - | - | 2.5 | 5 | - | 2.5 | - |
| FA 1 [wt.%] | - | - | - | - | - | - | - | 1 | 1 | - |
| E-Mod [GPa] | 4.35 | 4.87 | 5.34 | 5.75 | 6.90 | 5.32 | 5.35 | 5.18 | 5.30 | 5.28 |
| ISO 179 1eU [kJ/m₂] | 97.1 | 76.3 | 70.5 | 65.4 | 56.8 | 74.2 | 77.4 | 73.5 | 79.9 | 56.1 |
| CTI [V] | 125 | 175 | 200 | 200 | 150 | 200 | 225 | 200 | 225 | 150 |
| UL-94 1.6 mm | V-1 | V-0 | V-0 | V-0 | V-1 | V-0 | V-0 | V-0 | V-0 | V-0 |
| Melt stability | 1.14 | 1.15 | 1.17 | 1.21 | >5 | 1.12 | 1.10 | 1.23 | 1.15 | 1.22 |

The compounds according to the invention show good mechanical performance and a unique combination of CTI-values and FR-behavior.

## Claims

1. Blend comprising as components
(P1) at least one polyarylene ether sulfone polymer having less than 0.05 wt.% OH-endgroups, determined by potentiometric titration in dimethylformamide, and and
(P2) talc having a volumetric average particle size (D_{[4,3]}) of less than 10 µm, determined by laser diffraction as described in "A basic guide to particle characterization", Malvern Instruments LTd., 2015,
wherein the blend comprises component (P1) in an amount in the range of 50 to 85 wt.% and component (P2) in an amount in the range of 15 to 50 wt.%, wherein the wt.% values are in each case based on the total weight of the blend.

2. Blend according to claim 1, wherein the blend comprises additionally as component (P3) at least one polyarylene ether sulfone polymer having more than 0.1 wt.% OH-endgroups, determined by potentiometric titration in dimethylformamide.

3. Blend according to claim 1 or 2, wherein the blend comprises additionally as component (P4) at least one fatty acid having 10 to 34 carbon atoms.

4. Blend according to any of claims 1 to 3, wherein the at least one polyarylene ether sulfone polymer (component (P1)) is obtained by converting a reaction mixture (R_{G}) comprising as components:
(A1) dihalogen component comprising not less than 80 wt.% of at least one dihalogen compound selected from the group consisting of 4,4'-dichlorodiphenyl sulfone and 4,4'-difluorodiphenyl sulfone, based on the total weight of component (A1) in the reaction mixture (R_{G}),
(B1) dihydroxy component comprising not less than 80 wt.% of at least one dihydroxy compound selected from the group consisting of 4,4'-dihydroxy diphenyl sulfone, bisphenol A, 4,4'-dihydroxy biphenyl and hydroquinone, based on the total weight of component (B1) in the reaction mixture (R_{G}).

5. Blend according to any of claims 1 to 4, wherein the blend comprises less than 10 wt.% of polyamide, based on the total weight of the blend.

6. Blend according to any of claims 1 to 5, wherein the blend comprises
60 to 82 wt.% of component (P1),
18 to 40 wt.% of component (P2),
wherein the wt.% values are in each case based on the total weight of the blend.

7. Blend according to any of claims 1 to 5, wherein the blend comprises
60 to 81.5 wt.% of component (P1),
18 to 39.5 wt.% of component (P2),
0.5 to 15 wt.% of component (P3),
wherein the wt.% values are in each case based on the total weight of the blend.

8. Blend according to any of claims 1 to 5, wherein the blend comprises
60 to 81.9 wt.% of component (P1),
18 to 39.9 wt.% of component (P2),
0.1 to 2 wt.% of component (P4),
wherein the wt.% values are in each case based on the total weight of the blend.

9. Blend according to any of claims 1 to 5, wherein the blend comprises
60 to 81.4 wt.% of component (P1),
18 to 39.4 wt.% of component (P2),
0.5 to 15 wt.% of component (P3),
0.1 to 2 wt.% of component (P4),
wherein the wt.% values are in each case based on the total weight of the blend.

10. Film made from the blend according to any of claims 1 to 9.

11. Film according to claim 10, wherein the film has a thickness in the range of 10 to 500 µm.

12. Use of a blend according to any of claims 1 to 9 or of a film according to claim 10 or 11, in applications of electrical insulation.

13. Use according to claim 12, wherein the blend or film is used for electrical insulating a metal conductor.

14. Electronic devise comprising a metal conductor, and a blend according to any of claims 1 to 9 or a film according to claim 10 or 11, wherein the blend or the film at least partially electrical isolates the metal conductor.

15. Electronic device according to claim 14, wherein the electronic device is a metal coil, preferably a copper coil, wrapped in a slot liner made from a blend according to any of claims 1 to 9 or a film according to claim 10 or 11.

## Patentansprüche

1. Mischung, umfassend als Komponenten
(P1) wenigstens ein Polyarylenethersulfonpolymer mit weniger als 0,05 Gew.-% OH-Endgruppen, bestimmt durch potentiometrische Titration in Dimethylformamid, und und
(P2) Talkum mit einer volumetrischen mittleren Partikelgröße (D_{[4,3]}) von weniger als 10 µm, bestimmt durch Laserbeugung, wie beschrieben in "A Basic Guide to Particle Characterization", Malvern Instruments Ltd., 2015,
wobei die Mischung Komponente (P1) in einer Menge in dem Bereich von 50 bis 85 Gew.-% und Komponente (P2) in einer Menge in dem Bereich von 15 bis 50 Gew.-% umfasst, wobei die Gew.-%-Werte jeweils auf das Gesamtgewicht der Mischung bezogen sind.

2. Mischung nach Anspruch 1, wobei die Mischung zusätzlich als Komponente (P3) wenigstens ein Polyarylenethersulfonpolymer mit mehr als 0,1 Gew.-% OH-Endgruppen, bestimmt durch potentiometrische Titration in Dimethylformamid, umfasst.

3. Mischung nach Anspruch 1 oder 2, wobei die Mischung zusätzlich als Komponente (P4) wenigstens eine Fettsäure mit 10 bis 34 Kohlenstoffatomen umfasst.

4. Mischung nach einem der Ansprüche 1 bis 3, wobei das wenigstens eine Polyarylenethersulfonpolymer (Komponente (P1)) durch Umsetzen eines Reaktionsgemischs (R_{G}) erhalten ist, das als Komponenten umfasst:
(A1) Dihalogenkomponente umfassend nicht weniger als 80 Gew.-% an wenigstens einer Dihalogenverbindung ausgewählt aus der Gruppe bestehend aus 4,4'-Dichlordiphenylsulfon und 4,4'-Difluordiphenylsulfon, bezogen auf das Gesamtgewicht der Komponente (A1) in dem Reaktionsgemisch (R_{G}),
(B1) Dihydroxykomponente umfassend nicht weniger als 80 Gew.-% an wenigstens einer Dihydroxyverbindung ausgewählt aus der Gruppe bestehend aus 4,4'-Dihydroxydiphenylsulfon, Bisphenol A, 4,4'-Dihydroxybiphenyl und Hydrochinon, bezogen auf das Gesamtgewicht der Komponente (B1) in dem Reaktionsgemisch (R_{G}).

5. Mischung nach einem der Ansprüche 1 bis 4, wobei die Mischung weniger als 10 Gew.-% Polyamid, bezogen auf das Gesamtgewicht der Mischung, umfasst.

6. Mischung nach einem der Ansprüche 1 bis 5, wobei die Mischung umfasst
60 bis 82 Gew.-% an Komponente (P1),
18 bis 40 Gew.-% an Komponente (P2),
wobei die Gew.-%-Werte jeweils auf das Gesamtgewicht der Mischung bezogen sind.

7. Mischung nach einem der Ansprüche 1 bis 5, wobei die Mischung umfasst
60 bis 81,5 Gew.-% an Komponente (P1),
18 bis 39,5 Gew.-% an Komponente (P2),
0,5 bis 15 Gew.-% an Komponente (P3),
wobei die Gew.-%-Werte jeweils auf das Gesamtgewicht der Mischung bezogen sind.

8. Mischung nach einem der Ansprüche 1 bis 5, wobei die Mischung umfasst
60 bis 81,9 Gew.-% an Komponente (P1),
18 bis 39,9 Gew.-% an Komponente (P2),
0,1 bis 2 Gew.-% an Komponente (P4),
wobei die Gew.-%-Werte jeweils auf das Gesamtgewicht der Mischung bezogen sind.

9. Mischung nach einem der Ansprüche 1 bis 5, wobei die Mischung umfasst
60 bis 81,4 Gew.-% an Komponente (P1),
18 bis 39,4 Gew.-% an Komponente (P2),
0,5 bis 15 Gew.-% an Komponente (P3),
0,1 bis 2 Gew.-% an Komponente (P4),
wobei die Gew.-%-Werte jeweils auf das Gesamtgewicht der Mischung bezogen sind.

10. Folie aus der Mischung nach einem der Ansprüche 1 bis 9.

11. Folie nach Anspruch 10, wobei die Folie eine Dicke in dem Bereich von 10 bis 500 µm aufweist.

12. Verwendung einer Mischung nach einem der Ansprüche 1 bis 9 oder einer Folie nach Anspruch 10 oder 11 bei Anwendungen zur elektrischen Isolation.

13. Verwendung nach Anspruch 12, wobei die Mischung oder die Folie zum elektrischen Isolieren eines Metallleiters verwendet wird.

14. Elektronische Vorrichtung umfassend einen Metallleiter und eine Mischung nach einem der Ansprüche 1 bis 9 oder eine Folie nach Anspruch 10 oder 11, wobei die Mischung oder die Folie den Metallleiter wenigstens zum Teil elektrisch isoliert.

15. Elektronische Vorrichtung nach Anspruch 14, wobei die elektronische Vorrichtung eine Metallspule, vorzugsweise eine Kupferspule, ist, die in eine Schlitzauskleidung gewickelt ist, die aus einer Mischung nach einem der Ansprüche 1 bis 9 oder einer Folie nach Anspruch 10 oder 11 hergestellt ist.

## Revendications

1. Mélange comprenant comme composants
(P1) au moins un polymère de polyarylène éther sulfone ayant moins de 0,05 % en poids de groupes terminaux OH, déterminé par titrage potentiométrique dans le diméthylformamide, et
et
(P2) un talc ayant une taille moyenne de particule en volume (D_{[4,3]}) inférieure à 10 µm déterminée par diffraction laser tel que décrit dans "A basic guide to particle characterization", Malvern instruments Ltd., 2015,
le mélange comprenant le composant (P1) en une quantité dans la plage de 50 à 85 % en poids et le composant (P2) en une quantité dans la plage de 15 à 50 % en poids, les valeurs de % en poids étant dans chaque cas basées sur le poids total du mélange.

2. Mélange selon la revendication 1, dans lequel le mélange comprend en outre comme composant (P3) au moins un polymère de polyarylène éther sulfone ayant plus de 0,1 % en poids de groupes terminaux OH, déterminé par titrage potentiométrique dans le diméthylformamide.

3. Mélange selon la revendication 1 ou 2, dans lequel le mélange comprend en outre comme composant (P4) au moins un acide gras ayant 10 à 34 atomes de carbone.

4. Mélange selon l'une quelconque des revendications 1 à 3, dans lequel l'au moins un polymère de polyarylène éther sulfone (composant (P1)) est obtenu par conversion d'un mélange réactionnel (R_{G}) comprenant comme composants :
(A1) un composant dihalogéné comprenant pas moins de 80 % en poids d'au moins un composé dihalogéné choisi dans le groupe constitué par la 4,4'-dichlorodiphénylsulfone et la 4,4'-difluorodiphénylsulfone, sur la base du poids total de composant (A1) dans le mélange réactionnel (R_{G}), (B1) un composant dihydroxy ne comprenant pas moins de 80 % en poids d'au moins un composé dihydroxy choisi dans le groupe constitué par la 4,4'-dihydroxy diphénylsulfone, le bisphénol A, le 4,4'-dihydroxy biphényle et l'hydroquinone, sur la base du poids total du composant (B1) dans le mélange réactionnel (R_{G}).

5. Mélange selon l'une quelconque des revendications 1 à 4, dans lequel le mélange comprend moins de 10 % en poids de polyamide, par rapport au poids total du mélange.

6. Mélange selon l'une quelconque des revendications 1 à 5, dans lequel le mélange comprend
60 à 82 % en poids de composant (P1),
18 à 40 % en poids de composant (P2),
les valeurs de % en poids étant dans chaque cas basées sur le poids total du mélange.

7. Mélange selon l'une quelconque des revendications 1 à 5, dans lequel le mélange comprend
60 à 81,5 % en poids de composant (P1),
18 à 39,5 % en poids de composant (P2),
0,5 à 15 % en poids de composant (P3),
les valeurs de % en poids étant dans chaque cas basées sur le poids total du mélange.

8. Mélange selon l'une quelconque des revendications 1 à 5, dans lequel le mélange comprend
60 à 81,9 % en poids de composant (P1),
18 à 39,9 % en poids de composant (P2),
0,1 à 2 % en poids de composant (P4),
les valeurs de % en poids étant dans chaque cas basées sur le poids total du mélange.

9. Mélange selon l'une quelconque des revendications 1 à 5, dans lequel le mélange comprend
60 à 81,4 % en poids de composant (P1),
18 à 39,4 % en poids de composant (P2),
0,5 à 15 % en poids de composant (P3),
0,1 à 2 % en poids de composant (P4),
les valeurs de % en poids étant dans chaque cas basées sur le poids total du mélange.

10. Film fabriqué à partir du mélange selon l'une quelconque des revendications 1 à 9.

11. Film selon la revendication 10, dans lequel le film a une épaisseur dans la plage de 10 à 500 µm.

12. Utilisation d'un mélange selon l'une quelconque des revendications 1 à 9 ou d'un film selon la revendication 10 ou 11, dans des applications d'isolation électrique.

13. Utilisation selon la revendication 12, dans laquelle le mélange ou le film est utilisé pour isoler électriquement un conducteur métallique.

14. Dispositif électronique comprenant un conducteur métallique, et un mélange selon l'une quelconque des revendications 1 à 9 ou un film selon la revendication 10 ou 11, dans lequel le mélange ou le film isole au moins partiellement électriquement le conducteur métallique.

15. Dispositif électronique selon la revendication 14, dans lequel le dispositif électronique est une bobine métallique, de préférence une bobine de cuivre, enveloppée dans un revêtement de fente réalisé à partir d'un mélange selon l'une quelconque des revendications 1 à 9 ou un film selon la revendication 10 ou 11.
